# EUROPÄISCHE PATENTSCHRIFT

(11) **EP 2 350 598 B1**
(45) Veröffentlichungstag und Bekanntmachung des Hinweises auf die Patenterteilung: **09.04.2014**
(21) Anmeldenummer: 09778861.6
(22) Anmeldetag: 08.10.2009
(51) Int. Cl.: G01M 1/38, G01M 1/36

(54) **BERÜHRUNGSLOSE DICHTIGKEITSPRÜFUNG MITTELS IMPULSEN**
CONTACTLESS LEAK TEST USING PULSES
CONTRÔLE D ÉTANCHÉITÉ SANS CONTACT AU MOYEN D IMPULSIONS

(30) Priorität: 22.10.2008 DE 102008052634
(43) Veröffentlichungstag der Anmeldung: 03.08.2011
(73) Patentinhaber: KHS GmbH, 44143 Dortmund (DE)
(72) Erfinder: WOLFF, Michael, 21493 Schwarzenbek (DE); NUDING, Oliver, 22087 Hamburg (DE); WIEMER, Heinrich, 21033 Hamburg (DE)
(86) Internationale Anmeldenummer: PCT/EP2009/007208
(87) Internationale Veröffentlichungsnummer: WO 2010/046033

(56) Entgegenhaltungen:
- WO-A1-93/23180
- DE-A1- 19 531 754
- DE-A1- 19 703 528
- DE-A1- 19 959 198

## Beschreibung

Die Erfindung betrifft eine Dichtheitsprüfung, insbesondere eine berührungslose Druckkontrolle von gefüllten und verschlossenen Kunststoffflaschen.

Beispielsweise in der Getränkeindustrie ist es bekannt, Behälter, wie zum Beispiel Kunststoffflaschen, insbesondere gefüllte und verschlossene Kunststoffflaschen auf ihre Dichtheit zu kontrollieren, und undichte Behälter auszusortieren. Dies aus dem Grunde, als aus undichten Kunststoffflaschen beispielsweise Kohlensäure entweichen kann. Ein Entweichen von Kohlensäure kann dazu führen, dass beispielsweise ein Getränk schal wird. Denkbar ist aber auch, dass Fremdstoffe in den Behälter, bzw. in die Kunststoffflasche eindringen können, so dass das Füllgut sogar verderben kann. Möglich ist, dass zum Beispiel ein Verschluss der Kunststoffflasche diese nicht korrekt abdichtet, oder dass kleinste Haarrisse oder andere Beschädigungen bzw. Schwächungen in der Behälterwand vorhanden sind, welche durch Inspektionsvorrichtungen nicht erkannt wurden.

Die DE 10 2006 054 290 A1 befasst sich mit einer Dichtigkeitsprüfung von Kunststoffflaschen. Zur Dichtigkeitsprüfung wird der Behälter mechanisch von einem Paar Kompressionselementen zusammengedrückt. Nachteilig bei dem in der DE 10 2006 054 290 A1 offenbarten Vorgehen, ist der Umstand, dass eine solche Dichtigkeitsprüfung nicht in einen kontinuierlichen Prozessablauf eingebunden werden kann, da die betreffende Kunststoffflasche zu jeder Dichtigkeitsprüfung aus dem Flaschenfluss herausgenommen werden muss, oder der Flaschenfluss gar unterbrochen werden muss.

Die DE 39 36 163 A1 dagegen schlägt eine berührungslose Dichtigkeitsprüfung hermetisch abgeschlossener Behälter vor. Die hermetisch abgeschlossenen Behälter werden in eine Prüfkammer überführt, und dort einem. Prüfdruck unterworfen. Dabei soll das Problem gelöst werden, eine Vielzahl von Behältern unterschiedlichster Konfiguration mit unterschiedlichen Inhalten bei hohen Prüfgeschwindigkeiten zu kontrollieren. Allerdings wird auch hierzu der Behälterfluss beeinträchtigt oder gar unterbrochen.

Die DE 42 14 958 A1 befasst sich mit einer kontinuierlich arbeitenden Inspektionsmaschine für z.B. Kunststoffflaschen, welche die Kunststoffflasche einer Dichtigkeitsprüfung unterzieht. Allerdings sind die Kunststoffflaschen weder gefüllt noch verschlossen. Vielmehr wird Sterilluft in die Kunststoffflasche eingeleitet. Der mit Sterilluft gefüllte Innenraum wird dann unter Druck gesetzt. Ein Druckabfall zeigt eine defekte Kunststoffflasche an.

In der DE 41 36 472 A1 wird vorgeschlagen, gefüllte und verschlossene Flaschen kontinuierlich durch ein Flüssigkeitsbad zu transportieren. In dem Wasserbad wird die in der Flasche befindliche Flüssigkeit in Schwingungen versetzt, so dass insbesondere Kohlensäure ausperlt. Ist der Verschluss der Flasche nicht dicht, soll dies zu einem Austreten einer gewissen Getränkemenge führen, wodurch sich der Füllstand der Flasche verringert. Mit einer anschließenden Füllstandskontrolle soll dies detektiert werden, so dass die betreffende Flasche aussortiert werden könne.

Ein Druckimpulsmesssystem Ist aus der DE 199 59 198 A1 bekannt, mittels welchem Gepäckstücke vertikal von oben mit einem Gasstrahl belastet und die Oberflächenveränderung erfasst und ausgewertet werden kann. Die DE 195 31 754 A1 befasst sich mit einer vergleichbaren Druckkontrolle bei bewegenden, freistehenden Behältern (Dosen) auf einem Transportband. Gegen den Behälter wir ein Fluid, z.B. Luft gerichtet, so dass eine Verformung des Behälters bewirkt wird. Übersteigt die Verformung einen bestimmten Schwellenwert, wird angezeigt, dass der Behälter nicht unter Druck steht, also nicht richtig abgedichtet ist. Dieses System eignet sich besonders für dünnwandige Aluminiumdosen. Um sicherzustellen, dass der Behälter bei der Druckbeaufschlagung mit dem Fluid nicht verschoben wird, wird direkt gegenüber zum ersten Fluidstrahl oder -impuls ein zweiter Fluidstrahl oder -impuls erzeugt. Dadurch entstehen aber auch Verformungen aufgrund des zweiten Fluidstrahls. Um festzustellen, ob der Behälter bzw. die dünnwandige Aluminiumdose hinreichend dicht ist, wird eine komplizierte Meßstruktur installiert, welche beide Verformungen zueinander in Beziehung setzt, um so auf einen hinreichend dichten oder unbrauchbaren Behälter schließen zu können. Beispielsweise müssen Sensoren installiert werden, um die Verformungen aufnehmen zu können.

Nachteilig an dieser Vorrichtung und dem Erfassungsverfahren ist der hohe Gasverbrauch der mindestens vier Düsen zur sicheren Deformierung der Oberfläche und Stabilisierung der freistehenden Dosen, was mit einer erheblichen Geräuschbelastung elnhergeht.

Der Erfindung liegt daher die Aufgabe zugrunde, eine Dichtigkeitsprüfung von Kunststoffflaschen, bzw. eine berührungslose Druckkontrolle der Eingangs genannten Art mit einfachen Mittel so zu verbessern, dass diese ohne den kontinuierlichen Flaschenfluss zu stören oder zu unterbrechen zuverlässig eine undichte oder unbrauchbare Kunststoffflasche detektiert, wobei ein geringer Verbrauch an Druckmedium und eine geringe Lärmentwicklung entstehen soll.

Erfindungsgemäß wird die Aufgabe durch eine Dichtigkeitsprüfung von Kunststoffflaschen mit den Merkmalen des Anspruchs 1 gelöst, wobei die Kunststoffflaschen lagestabil gehalten an einer Prüfeinrichtung vorbeigeführt werden, wobei die Prüfeinrichtung ein Opto-elektrisches Erfassungssystem und ein Druckmediumsystem aufweist, wobei das Erfassungssystem und zumindest ein steuerbares Ventil des Druckmediumsysterns mit einer Auswerte- und Steuereinheit in Verbindung stehen, wobei zumindest ein oder mehrere Druckmediumimpulse mit einer variabler Zeitdauer von nur 1ms bis 6 ms erzeugt werden, wenn die Kunststoffflasche an einer Düse des Druckmediumsystems vorbeigeführt wird. Dabei belastet der zumindest eine bzw. jeder der Druckmediumimpulsa einen Flaschenwandbereich punktförmig, wobei zumindest eine Lichtquelle des Erfassungssystems zumindest den, den Druckmediumimpuls belasteten Flaschenwandbereich gleichzeitig mit der Erzeugung des Druckmediumimpulses ausleuchtet, wobei das Erfassungssystem bzw. dessen Kamera Daten des mit dem Druckmediumimpulses belasteten Flaschenwandbereichs aufnimmt und zur Auswerte- und Steuereinheit leitet. Die Aufgabe wird zudem durch eine Dichtigkeitsprüfung von Kunststoffflaschen mit den Merkmalen des Anspruchs 13 und mit einer Prüfeinrichtung mit den Merkmalen des Anspruchs 15 gelöst.

In günstiger Ausgestaltung besteht die Kunststoffflasche aus einem dünnwandigen Kunststoff, z.B. aus PET, PEN oder PE ohne dass die genannten Werkstoffe einschränkend genannt sein sollen. Die Kunststoffflasche kann eine Mehrwegflasche oder eine Einwegflasche sein.

Zweckmäßiger Weise weist die Düse des Druckmediumsystems einen Abstand von weniger als 15 mm vorzugsweise einen Abstand von 5 bis 6 mm zum betreffenden Flaschenwandbereich auf. Dies ist vorteilhaft, als der erzeugte Druckmediumstrahl eine relativ kurze Wegstrecke überwinden muss, was sich vorteilhaft auf seine punktförmige Ausrichtung und auf geringe oder gar auf keine Druckenergieverluste auswirkt.

In bevorzugter Ausgestaltung weist die Düse eine Düsenöffnung mit einem bevorzugten Öffnungsbetrag von weniger als 5 mm vorzugsweise von 2 mm (lichter Durchmesser) auf, so dass sich dies ebenfalls auf eine besonders punktförmige Konzentration des Druckmediumstrahls auswirkt. Natürlich soll der Öffnungsbetrag nur beispielhaft genannt sein. Denkbar ist zum Beispiel eine Düse mit verstellbarer Düsenöffnung.

Um eine möglichst unbeeinträchtige Betrachtungsposition der Kamera zu erreichen, ist die Kamera bezogen auf die Düse zweckmäßiger Weise oberhalb dieser angeordnet, und in einem schrägen Winkel von oben auf den betreffenden Flaschenwandbereich ausgerichtet. Selbstverständlich kann die Kamera auch in einem schrägen Winkel von unten auf den betreffenden Flaschenwandbereich ausgerichtet sein. Um eine möglichst senkrechte Einwirkung des Druckmediums sowie eine senkrecht ausgerichtetes Erfassungssystem zu erreichen, können das Erfassungssystem und die Düse nahezu parallel zum Objekt bzw. zur Kunststoffflasche ausgerichtet sein. Natürlich kann der genaue Winkel abhängig von den optimalen Materialeigenschaften der Flaschenwand variieren.

In zweckmäßiger Ausgestaltung weist das Erfassungssystem zwei Lichtquellen auf, von denen eine bezogen auf die Kamera oberhalb und die andere Lichtquelle unterhalb der Kamera aber oberhalb der Düse angeordnet ist. Mit dieser vorteilhaften Ausführung ergibt sich eine besonders gute Ausleuchtung des betreffenden Flaschenwandbereiches. Natürlich sind beide Lichtquellen mit der Auswerteund Steuereinheit verbunden, so dass beide Lichtquellen gleichzeitig zur Erzeugung des Druckmediumstrahls angesteuert werden können. Selbstverständlich liegt es im Sinn der Erfindung beide Lichtquellen auch zeitlich versetzt anzusteuern um so eine entsprechenden Schattenbildung der Einbuchtung mittels der Kamera aufzunehmen, was sich vorteilhaft auf eine noch sichere Auswertung der aufgenommenen Daten der Einbuchtung auswirkt.

In bevorzugter Ausführung ist das verwendete Druckmedium ein Gas, zum Beispiel Druckluft oder ein unter Druck stehendes Inertgas.

Die Prüfeinrichtung ist in bevorzugter Ausgestaltung einer Etikettiermaschine zugeordnet, wobei die Prüfeinrichtung so angeordnet ist, dass die noch nicht etikettierte, aber gefüllte und verschlossene Kunststoffflasche berührungslos auf ihre Dichtigkeit hin überprüft wird. Selbstverständlich können mit der Erfindung auch etikettierte Flaschen berührungslos auf ihre Dichtigkeit überprüft werden, was besonders sinnvoll ist, wenn nicht etikettierte Flaschen nicht überprüft werden können. Alternativ kann die Prüfeinrichtung freistehend an einem Transporteur, z.B. an einem Transportband angeordnet sein, wobei die Auswertung analog verläuft.

Da die zu überprüfenden Kunststoffflaschen mitunter eine hohe Eigengeschwindigkeit besitzt, und um den Flaschenfluss nicht zu beeinträchtigen, ist es zweckmäßig im Sinne der Erfindung, wenn das Ventil als Hochleistungsschnellschlussventil ausgeführt ist. Dieses kann in besonders geeigneter Weise auf die an der Prüfeinrichtung bzw. der Düse relativ schnell vorbeilaufenden Kunststoffflaschen geöffnet und geschlossen werden, so dass jede Kunststoffflasche berührungslos auf hinreichende Dichtigkeit überprüft werden kann. Eine Überprüfung einer jeden Kunststoffflasche ist insbesondere im Lebensmittelbereich, insbesondere bei zum Verzehr geeigneten Flüssigkeiten erforderlich, da eine stichprobenartige Untersuchung nicht ausreichend ist.

Auch bezüglich des lagestabilen Transports eignet sich die Etikettiermaschine besonders vorteilhaft, da diese ohnehin Drehteller und Packtulpen aufweist, die Kunststoffflasche also sehr exakt geführt wird. Insofern wurde vorteilhaft gefunden, die Kunststoffflasche bodenseitig auf dem Drehteller aufstehend und verschlussseitig mittels der Packtulpe gegen ein Verschieben oder gar Umfallen der aufgrund des Druckmediumimpulses erzeugten Kraft zu sichern. Selbstverständlich kann vorgesehen sein, dass sich die Kunststoffflasche nicht verdreht, wenn der Druckmediumstrahl erzeugt wird und auf den betreffenden Flaschenwandabschnitt einwirkt.

Der Druckmediumstrahl kann in bevorzugter Ausführung auf einen Etikettierbereich der Kunststoffflasche gerichtet sein. Denkbar ist aber auch, dass ein Flaschenwandbereich, welcher mit dem Druckmediumstrahl kurzzeitig beaufschlagt wird, eine Schulter der Kunststoffflasche und/oder ein anderer zylindrischer Bereich, welcher strukturfrei sein sollte, der Kunststoffflasche ist, ohne den betreffenden Flaschenwandbereich auf die beispielhaft genannten einzuschränken.

Vorteilhaft wird mit der Erfindung eine berührungslose Dichtheitsprüfung bzw. eine berührungslose Druckkontrolle von Kunststoffflaschen zur Verfügung gestellt, bei welcher mit einem Mediumdruck von mehr als 0,5 bar mit einem Druckmediumimpuls eine kontinuierliche Dichtheitsprüfung bevorzugt in einer Etikettiermaschine durchgeführt werden kann. Der Druckmediumimpuls wird nur erzeugt, wenn sich gerade eine Kunststoffflasche vor der Düse befindet. Wegen der zeitlich sehr kurzen Erzeugung und Aufrechterhaltung eines oder mehrerer Druckmediumimpulsstrahlen pro Kunststoffflasche ergibt sich eine geräuschreduzierte berührungslose Druckkontrolle. Messungen haben ergeben, dass eine Lautstärke von weniger als 80 db bzw. genau 74 db vorhanden ist, wenn der zeitlich sehr kurze Druckmediumimpulsstrahl erzeugt wird. Der zeitlich sehr kurze Druckmediumimpulsstrahl wirkt sich natürlich auch auf einen geringen Druckmediumverbrauch aus. Mittels der Daten aufnehmenden Messeinheit bzw. Kamera bzw. Auswerteeinheit wird erkannt, ob die betreffende Kunststoffflasche eine durch den Druckmediumimpulsstrahl erzeugte Einbuchtung aufweist, wobei festgestellt wird, welche Form die Einbuchtung aufweist. Die Auswerteeinheit generiert gegebenenfalls ein Signal zum Aussortieren der betreffenden Kunststoffflasche. Die betreffende Kunststoffflasche kann nach dem Etikettieren aussortiert werden, oder die Etikettieraggregate werden beispielsweise über die Auswerte- und Steuereinheit so angesteuert, dass die betreffende Kunststoffflasche nicht etikettiert wird. Überraschender Weise wurde gefunden, dass mittels des zeitlich sehr kurzen Druckmediumimpulses und der genauen, punktförmigen Belastung des definierten Flaschenwandbereiches störende Schwingungen in dem betreffenden Flaschenwandbereich bzw. in der restlichen Flaschenwand und eine störende Entgasung, welche einer Bildung einer Einbuchtung entgegenwirkt und einer Detektion derselben entgegensteht, umgangen werden können.

In einer Weiterbildung der berührungslosen Dichtheitsprüfung, ist vorteilhaft vorgesehen, dass die Kunststoffflaschen lagestabil gehalten an einer Prüfeinrichtung vorbeigeführt werden, wobei die Prüfeinrichtung ein Opto-elektrisches Erfassungssystem und ein Druckmediumsystem aufweist, wobei das Erfassungssystem und zumindest ein steuerbares Ventil des Druckmediumsystems mit einer Auswerte- und Steuereinheit in Verbindung stehen, wobei ein Druckmediumimpuls mit einer Zeitdauer von 1 ms bis 6 ms erzeugt wird, wenn die Kunststoffflasche an einer Düse des Druckmediumsystems vorbeigeführt wird, wobei der Druckmediumimpuls einen Flaschenwandbereich punktförmig belastet, wobei zumindest eine Laserlichtquelle des Erfassungssystems zumindest den, den Druckmediumimpuls belasteten Flaschenwandbereich gleichzeitig mit der Erzeugung des Druckmediumimpulses ausleuchtet bzw. bestrahlt, wobei ein Laserwegmesssensor oder ein anderes geeignetes Messsystem des Erfassungssystems Daten des mit dem Druckmediumimpulses belasteten Flaschenwandbereichs aufnimmt und zur Auswerte- und Steuereinheit leitet.

Vorteilhaft kann der Laserwegmesssensor das Vorhandensein einer durch den Druckmediumimpuls bewirkten Einbuchtung in dem betreffenden Flaschewandbereich detektieren, wobei die Auswerteeinheit eine tatsächliche Form der Einbuchtung, z.B. deren Tiefe und/oder deren Durchmesser bestimmt. In der Auswerte- und Steuereinheit sind Referenzdaten des betreffenden Flaschentyps (z.B Material, Größe, Füllmenge) und des darin eingefüllten Füllgutes und daraus resultierend eine noch zulässige Form der Einbuchtung abgelegt. In der Auswerte- und Steuereinheit werden die Referenzdaten mit der Form der tatsächlichen Einbuchtung verglichen. Dies kann natürlich auch in einem mit der Auswerte- und Steuereinheit oder nur mit einer Steuereinheit verbundenen Rechner durchgeführt werden. Übersteigt die detektierte, tatsächliche Form der Einbuchtung einen vorgegebenen Wert, generiert die Auswerte- und Steuereinheit ein Signal zum Aussortieren der betreffenden Kunststoffflasche. Auf eine diesbezügliche Auswertung wird weiter unten eingegangen.

In günstiger Ausgestaltung besteht auch hierbei die Kunststoffflasche aus einem dünnwandigen Kunststoff, z.B. aus PET, PEN oder PE ohne dass die genannten Werkstoffe einschränkend genannt sein sollen. Die Kunststoffflasche kann eine Mehrwegflasche oder eine Einwegflasche sein.

Zweckmäßiger Weise weist die Düse des Druckmediumsystems, wie zuvor, einen Abstand von weniger als 15 mm vorzugsweise einen Abstand von 5 bis 6 mm zum betreffenden Flaschenwandbereich auf. Dies ist vorteilhaft, als der erzeugte Druckmediumstrahl eine relativ kurze Wegstrecke überwinden muss, was sich vorteilhaft auf seine punktförmige Ausrichtung und auf geringe oder gar auf keine Druckenergieverluste auswirkt.

Um eine möglichst unbeeinträchtige Betrachtungsposition des Laserwegmesssensors zu erreichen, ist die Düse bezogen auf den Sensor zweckmäßiger Weise oberhalb dieser oder unterhalb dieser angeordnet, und bevorzugt in einem schrägen Winkel von oben oder unten auf den betreffenden Flaschenwandbereich ausgerichtet, wobei diese bevorzugte Anordnung gewählt werden sollte, wenn dadurch Vorteile bezogen auf eine exakt senkrechte Ausrichtung erreicht werden können. Selbstverständlich kann die Düse (die Düsen) auch in einem schrägen Winkel von rechts und/oder links auf den betreffenden Flaschenwandbereich ausgerichtet sein. Natürlich ist es denkbar die Düse bzw. können die Düsen auch neben dem Laserwegmesssensor anzuordnen.

Vorteilhaft kann also auch ein Laserwegmesssensor anstelle einer Kamera verwendet werden. In bevorzugter Ausgestaltung ist der Laserwegmesssensor so angeordnet, dass dieser mit einer senkrechten Achse parallel zur Mittelachse der Flasche steht. Die Flasche wird dabei am Laserwegmesssensor vorbeigeführt, wobei die von der Druckluft erzeugte Eindellung als Distanz aufgezeichnet wird. Günstiger Weise kann ein Sensormesskopf vertikal in verschiedenen Winkeln angeordnet sein. In bevorzugter Ausgestaltung kann ein Winkel von 8,5° vorgesehen sein, ohne den Winkelbetrag auf den beispielhaft genannten Wert zu beschränken. Mit der beispielhaften Winkellage von 8,5° ist der von dem Laserwegmesssensor ausgestrahlte Laserstrahl in der Senkrechten um plus oder minus 8,5° geneigt, wobei der Neigungswinkel nicht fest vorgegeben ist, und abhängig vom Sensorkopftyp sein kann.

In bevorzugter Ausführung ist das verwendete Druckmedium, wie zuvor, ein Gas, zum Beispiel Druckluft oder ein unter Druck stehendes Inertgas.

Die Prüfeinrichtung ist auch hierbei in bevorzugter Ausgestaltung einer Etikettiermaschine zugeordnet, wobei die Prüfeinrichtung so angeordnet ist, dass die noch nicht etikettierte, aber gefüllte und verschlossene Kunststoffflasche berührungslos auf ihre Dichtigkeit hin überprüft wird. Selbstverständlich können mit der Erfindung auch etikettierte Flaschen berührungslos auf ihre Dichtigkeit überprüft werden, was besonders sinnvoll ist, wenn nicht etikettierte Flaschen nicht überprüft werden können. Die Prüfeinrichtung kann aber auch einem Transporteur z.B. einem Transportband zugeordnet sein.

Da die Kunststoffflasche mitunter eine hohe Eigengeschwindigkeit besitzt, und um den Flaschenfluss wiederum nicht zu beeinträchtigen, ist es zweckmäßig im Sinne der Erfindung, wenn das Ventil als Hochleistungsschnellschlussventil ausgeführt ist. Dieses kann in besonders geeigneter Weise auf die an der Prüfeinrichtung bzw. der Düse relativ schnell vorbeilaufenden Kunststoffflaschen geöffnet und geschlossen werden, so dass jede Kunststoffflasche berührungslos auf hinreichende Dichtigkeit überprüft werden kann. Eine Überprüfung einer jeden Kunststoffflasche ist insbesondere im Lebensmittelbereich, insbesondere bei zum Verzehr geeigneten Flüssigkeiten erforderlich, da eine stichprobenartige Untersuchung nicht ausreichend ist.

Auch bezüglich des lagestabilen Transports eignet sich die Etikettiermaschine wie bereits beschrieben besonders vorteilhaft, da diese ohnehin Drehteller und Packtulpen aufweist, die Kunststoffflasche also sehr exakt geführt wird. Insofern wurde vorteilhaft gefunden, die Kunststoffflasche bodenseitig auf dem Drehteller aufstehend und verschlussseitig mittels der Packtulpe gegen ein Verschieben oder gar Umfallen der aufgrund des Druckmediumimpulses erzeugten Kraft zu sichern. Selbstverständlich kann vorgesehen sein, dass sich die Kunststoffflasche nicht verdreht, wenn der Druckmediumstrahl erzeugt wird und auf den betreffenden Flaschenwandabschnitt einwirkt.

Der Druckmediumstrahl kann ebenfalls in bevorzugter Ausführung auf einen Etikettierbereich der Kunststoffflasche gerichtet sein. Denkbar ist aber auch, dass ein Flaschenwandbereich, welcher mit dem Druckmediumstrahl kurzzeitig beaufschlagt wird, eine Schulter der Kunststoffflasche und/oder ein anderer zylindrischer Bereich, welcher strukturfrei sein sollte, der Kunststoffflasche ist, ohne den betreffenden Flaschenwandbereich auf die beispielhaft genannten einzuschränken.

Vorteilhaft wird mit der Weiterbildung der Erfindung mittels des Laserwegmesssensors ebenso eine berührungslose Dichtheitsprüfung bzw. eine berührungslose Druckkontrolle von Kunststoffflaschen zur Verfügung gestellt, bei welcher mit einem Mediumdruck von mehr als 0,5 bar mit einem Druckmediumimpuls eine kontinuierliche Dichtheitsprüfung bevorzugt in einer Etikettiermaschine durchgeführt werden kann. Der Druckmediumimpuls wird nur erzeugt, wenn sich gerade eine Kunststoffflasche vor der Düse befindet. Wegen der zeitlich sehr kurzen Erzeugung und Aufrechterhaltung des pro Kunststoffflasche einzigen Druckmediumimpulsstrahls ergibt sich eine geräuschreduzierte berührungslose Druckkontrolle. Messungen haben ergeben, dass eine Lautstärke von weniger als 80 db bzw. genau 74 db vorhanden ist, wenn der zeitlich sehr kurze Druckmediumimpulsstrahl erzeugt wird. Der zeitlich sehr kurze Druckmediumimpulsstrahl wirkt sich natürlich auch auf einen geringen Druckmediumverbrauch aus. Mittels des Laserwegmesssensors wird erkannt, ob die betreffende Kunststoffflasche eine durch den Druckmediumimpulsstrahl erzeugte Einbuchtung bzw. Eindellung aufweist, wobei festgestellt wird, welche Art die Einbuchtung aufweist, also ob diese noch tolerierbar ist oder nicht. Die Auswerteeinheit generiert gegebenenfalls ein Signal zum Aussortieren der betreffenden Kunststoffflasche. Die betreffende Kunststoffflasche kann nach dem Etikettieren aussortiert werden, oder die Etikettieraggregate werden beispielsweise über die Auswerte- und Steuereinheit so angesteuert, dass die betreffende Kunststoffflasche nicht etikettiert wird. Überraschender Weise wurde gefunden, dass mittels des zeitlich sehr kurzen Druckmediumimpulses und der genauen, punktförmigen Belastung des definierten Flaschenwandbereiches störende Schwingungen in dem betreffenden Flaschenwandbereich bzw. in der restlichen Flaschenwand und eine störende Entgasung, welche einer Bildung einer Einbuchtung entgegenwirkt und einer Detektion derselben entgegensteht, umgangen werden können.

Zum Bestimmen der Distanz, welche mit dem Laserwegmesssensor aufgenommen wird, bzw. zur Bestimmung der Eindellung auf ihre Tolerierbarkeit, oder ob der Behälter undicht ist, also die Eindellung nicht mehr tolerierbar ist, kann nun in zwei Stufen vorgegangen werden, und zwar mit einer Messwertaufbereitung und mit einer Auswertung selbst.

Zur Messwertaufbereitung kann vorgesehen sein, eine gemessene Kurve um Messfehler des Laserwegmesssensors zu bereinigen. Es kann auch vorgesehen sein, die Messkurve zu glätten, oder eine Tiefpassfilterung der Kurve durchzuführen. Selbstverständlich können vorgenannte Maßnahmen einzeln oder sequentiell gemeinsam (auch mehrfach) genutzt werden, um die Messwertaufbereitung durchzuführen.

Zur Auswertung kann beispielhaft wie folgt vorgegangen werden:

Zunächst werden Sollkurven miteinander verglichen. Dies bedeutet, dass vorberechnete Kurven, oder alternativ ohne Anblasung aufgenommen Messkurven eines sich vorbeibewegenden Objekts (also der beispielhaften Flasche) bei verschiedenen Geschwindigkeiten als Referenzkurven berücksichtigt werden. Dem liegt die Erkenntnis zugrunde, dass sich Messkurven mit der Geschwindigkeit verändern. Es können beliebig viele Kurven, jedoch bevorzugt zumindest eine als Referenzkurve berücksichtigt werden. Als zweite Messkurve wird das angeblasene Objekt aufgenommen, welches sich am Laserwegmesssensor vorbeibewegt. Beide Kurven, also die des angeblasenen Objekts und die des nicht angeblasenen Objekts sind in ihrer X-Richtung, also in ihrer Position versetzt. Dieser Versatz bedarf einer Korrektur. Möglich ist hier ein fixer Offset, eine Überlagerung mittels einer Korrelation, oder das konkrete Ermitteln der Position von Merkmalen der Kurven, wie zum Beispiel ein gemittelter höchster Punkt als Zentrum.

Aufgrund unterschiedlicher Objektdistanzen zum Lasermesssensor bzw. Laserwegmesssensor und unterschiedlicher Objektgrößen sind die Kurven, also die des angeblasenen Objekts und die des gespeicherten Referenzobjekts bzw. die des nicht angeblasenen Objekts in ihrer Distanz zum Sensor unterschiedlich. Dies bewirkt einen Y-Offset, der korrigiert werden muss. Danach ergibt sich im Messfenster eine Differenz der Kurven, welche nahezu ausschließlich von dem Anblasen herrührt. Um eine Korrektur in Y-Richtung durchzuführen kann eine Überlagerung mittels einer Korrelation durchgeführt werden, oder ein Durchschnitt eines Offsetfensters bei beiden Kurven durchgeführt werden. Die Differenz entspricht der notwendigen Höhenkorrektur. Optimaler Weise liegt diese Offsetfenster möglichst nahe an der Eindellung. Zur Evaluierung kann der Durchschnitt einer Messkurve innerhalb eines Messfensters berechnet werden, wobei die Differenz dieser Durchschnittswerte mit einem Schwellwert toleriert wird. Möglich ist auch, den Flächeninhalt zwischen den beiden Kurven innerhalb eines Messfensters zu berechnen, welcher mit einem Schwellwert toleriert wird.

Zum weiteren kann mit einem Referenzwert gemessen werden. Hierzu wird, kurz bevor das vorbeifahrende Objekt mittels des Mediums eingedellt wird, dicht an der Eindellung innerhalb eines Referenzfensters ein Durchschnittswert gemessen. Durch diesen Wert wird die wiederholgenaue Lage des Objekts zum Laserwegmesssensor und die Form (Durchmesser) des Objekts vernachlässigbar. Zur Evaluierung kann innerhalb eines Messfensters ein Durchschnittswert berechnet werden. Die Distanz dieses Wertes zum Referenzdurchschnitt wird mit einem Schwellwert toleriert. Der Referenzdurchschnitt kann aber auch durch eine überlagerte, gedachte horizontale Linie erweitert werden. Sodann kann der Flächeninhalt dieser Kurve zu der korrigierten Messkurve berechnet und mit einem Schwellwert toleriert werden.

Weitere vorteilhafte Ausgestaltungen der Erfindung sind in den Unteransprüchen und der folgenden Figurenbeschreibung offenbart. Es zeigen
- Fig. 1: eine beispielhafte Etikettiermaschine mit einer Prüfeinrichtung, und
- Fig. 2: die Prüfeinrichtung in prinzipieller Darstellung,
- Fig. 3: eine Prüfeinrichtung mit einem Laserwegmesssensor, und
- Fig. 4: eine Lasertriangulation als Detaildarstellung,
- Fig. 5: einen Strahlengang eines Laserstrahls, und
- Fig. 6: skalierte Messkurven.

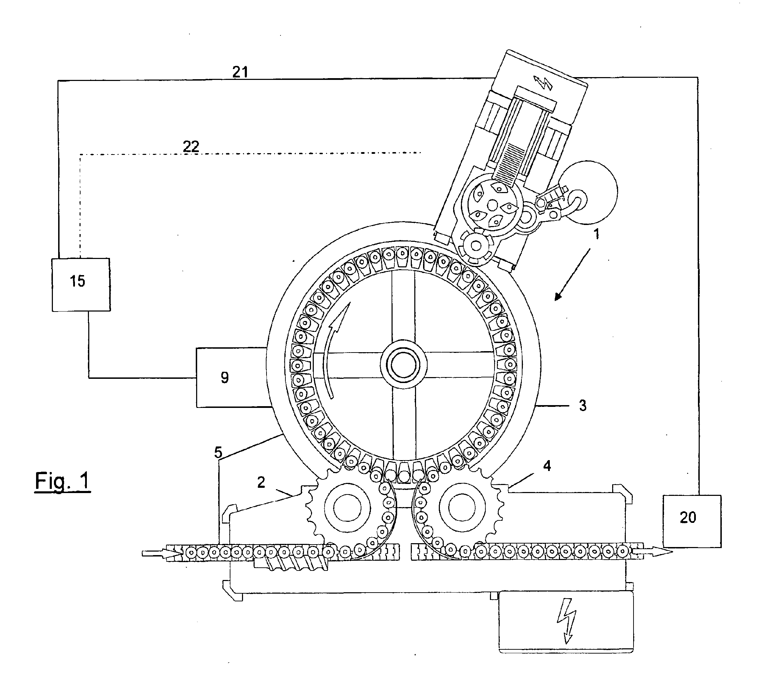

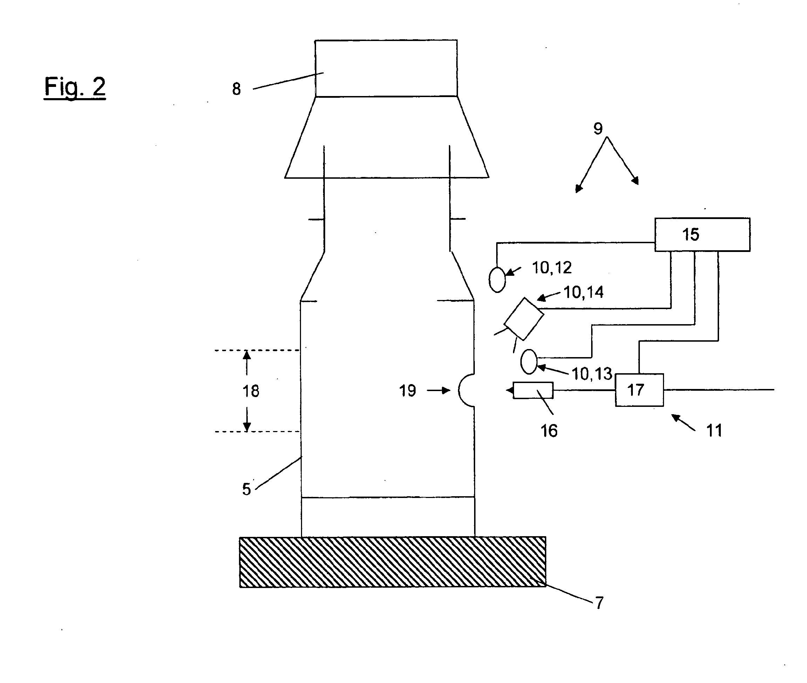

Figur 1 zeigt eine Etikettiermaschine 1. Die Etikettiermaschine 1 weist einen Einlaufstern 2, ein Etikettierkarussell 3 und einen Auslaufstern 4 auf. Gefüllte und verschlossene Kunststoffflaschen 5 werden der Etikettiermaschine 1 in bekannter weise zugeführt und aus dieser etikettiert ausgeführt. An der Etikettiermaschine 1 ist beispielhaft ein Etikettieraggregat 6 angeordnet. Die Kunststoffflaschen 5 sind zumindest in dem Etikettierkarussel 3 exakt geführt, also bodenseitig auf einem Drehteller 7 aufstehend und verschlussseitig mit einer Packtulpe 8 lagestabil gehalten(Figur 2)

Beispielhaft in Rotationsrichtung des Etikettierkarussels 3 gesehen ist vor dem Etikettieraggregat 6 eine Prüfeinrichtung 9 zur berührungslosen Druckkontrolle jeder einzelnen, an der Prüfeinrichtung 9 vorbeilaufenden, gefüllten und verschlossenen Kunststoffflasche 5 angeordnet. Selbstverständlich kann die Prüfeinrichtung 9 auch an einem Transporteur z.B. einem Flaschentransportband angeordnet sein.

In Figur 2 ist die Prüfeinrichtung 9 als Einzelheit dargestellt. Ein Verschluss der Kunststoffflasche 5 ist in Figur 2 nicht dargestellt.

Die Prüfeinrichtung 9 weist ein Opto-elektrisches Erfassungssystem 10 und ein Druckmediumsystem 11 auf. Das Opto-elektrische Erfassungssystem 10 weist beispielhaft zwei Lichtquellen 12 und 13 und eine Kamera 14 auf. Die Komponenten des Opto-elektrischen Erfassungssystems 10 sind jeweils mit einer Auswerte- und Steuereinheit 15 verbunden. Das Druckmediumsystem 11 weist eine Düse 16, ein steuerbares Ventil 17, in der bevorzugten Ausführung als Hochleistungsschnellschlussventil 17, und eine nicht dargestellte Druckmediumquelle auf. Das Ventil 17 steht mit der Auswerte- und Steuereinheit 15 in Verbindung.

Bewegt sich eine Kunststoffflasche 5 an der Prüfeinrichtung 9 vorbei, bzw. erreicht die Kunststoffflasche 5 die Position der Düse 16 wird ein kurzzeitiger Druckmediumimpuls (Ansteuern zum Öffnen des Ventils 17) erzeugt, der auf einen Flaschenwandbereich 18 ausgerichtet ist. Der Druckmediumimpuls hat eine Zeitdauer von weniger als 10 msec, bzw. eine Zeitdauer von 5 bis 6 msec, und weist einen Druckbetrag von bevorzugt mehr als 0,5 bar auf. Der Druckmediumimpuls belastet den Flaschenwandbereich 18 der Kunststoffflasche 5 punktförmig, und erzeugt gegebenenfalls eine Einbuchtung 19, wenn die Kunststoffflasche 5 zum Beispiel nicht dicht verschlossen ist.

Gleichzeitig mit der Ansteuerung des Ventils 17, also mit der Erzeugung des kurzzeitigen Druckmediumimpulses werden die beiden Lichtquellen 12 und 13 und die Kamera 14 angesteuert. Die Lichtquellen 12 und 13 leuchten den Flaschenwandbereich 18 blitzartig aus, so dass die Kamera 14 entsprechende Daten des betreffenden Flaschenwandbereiches 18 aufnehmen kann. Die Kamera 14 sendet diese tatsächlichen Daten, also die Form (z.B. Tiefe, Durchmesser) der Einbuchtung 19 an die Auswerte- und Steuereinheit 15. In der Auswerte- und Steuereinheit 15 sind Referenzdaten bzw. Referenzbilder betreffend des jeweiligen Flaschentyps (Größe, Material, Form) mit dem darin jeweils eingefüllten Füllgut abgelegt, aus welchen Daten sich noch zu tolerierende Einbuchtungsarten bzw. Einbuchtungsformen ergeben. Die tatsächlichen Daten werden mit den Referenzdaten verglichen. Ergibt sich eine nicht zu tolerierende Abweichung in das negative, also ist die Einbuchtung 19 derart, dass der Innendruck der Kunststoffflasche 5 der durch den Druckmediumimpuls erzeugten Druckkraft nicht genügend entgegenwirkt, erzeugt die Auswerte- und Steuereinheit 15 ein Signal zum Aussortieren der betreffenden Flasche, da diese offensichtlich zum Beispiel nicht dicht verschlossen ist.

Das Signal zum Aussortieren kann von der Auswerte- und Steuereinheit 15 direkt an eine Aussortiervorrichtung 20 geleitet werden, welche in Flussrichtung der Kunststoffflaschen 5 hinter der Etikettiermaschine 1 angeordnet ist. Dies ist in Figur 1 mittels der durchgezogenen Linie 21 dargestellt. Möglich ist aber auch, dass die Auswerte- und Steuereinheit 15 mit dem beispielhaften Etikettieraggregat 6 verbunden ist (strichpunktierte Linie 22), so dass dieses ein Signal zum nicht etikettieren der betreffenden, undichten Kunststoffflasche 5 erhält. In nachfolgenden Inspektionsvorrichtungen, welche die Kunststoffflaschen auf korrektes Etikettieren untersuchen würden, könnte dann ein Signal zum Aussortieren der betreffenden, undichten, nicht etikettierten Kunststoffflasche 5 erzeugt werden.

In dem in Figur 2 beispielhaften Ausführungsbeispiel ist der jeweilige Flaschenwandbereich 18, welcher mit dem kurzzeitigen Druckmediumimpuls beaufschlagt wird, ein Etikettierbereich der Kunststoffflasche 5. Die Kunststoffflasche 5 ist beispielhaft eine Einwegflasche, welche aus einem dünnwandigen Kunststoff, z.B. PET, PEN oder PE besteht. Die Düse 16 weist eine Öffnung mit einem lichten Durchmesser von bevorzugt 2 mm auf, und hat einen Abstand von weniger als 15 mm, bevorzugt einen Abstand von 5 bis 6 mm zum Flaschenwandbereich 18.

Die Kamera 14 ist bezogen auf die Düse 16 in der Zeichnungsebene beispielhaft oberhalb dieser angeordnet. Die erste Lichtquelle 12 ist in der Zeichnungsebene oberhalb der Kamera 14 angeordnet, wobei die zweite Lichtquelle 13 unterhalb der Kamera 14 aber in der Zeichnungsebene oberhalb der Düse 16 angeordnet ist.

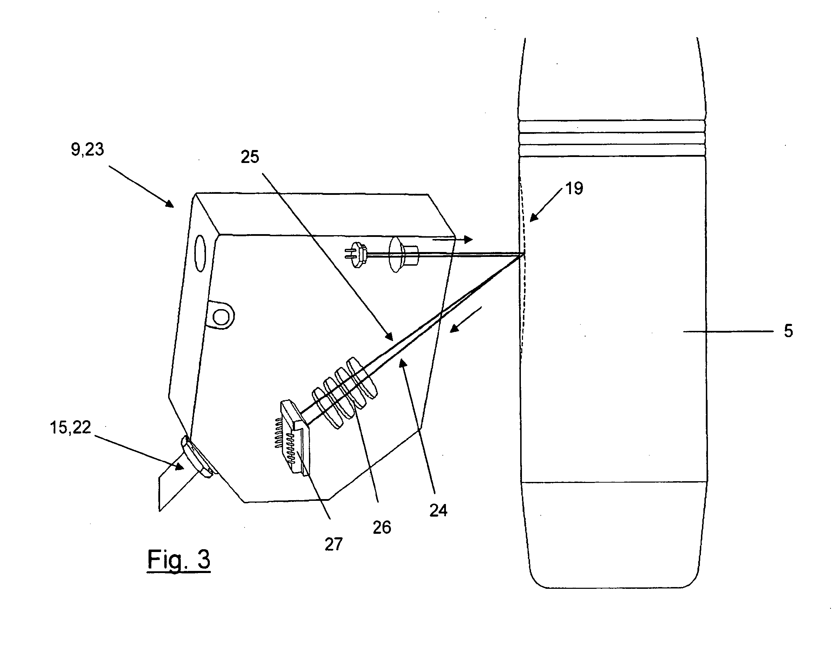

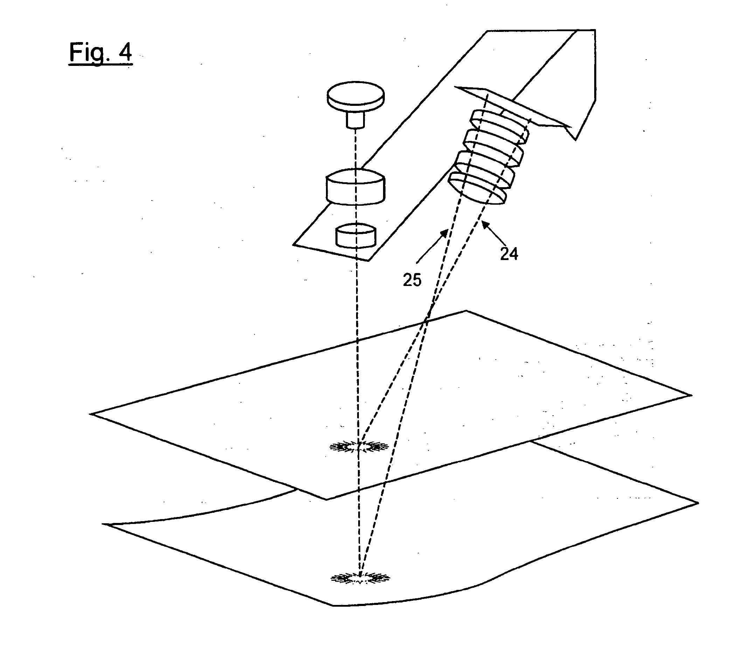

Im Unterschied zu Figur 2 zeigt Figur 3 eine Prüfeinrichtung 9 mit einem Laserwegmesssensor 23 als Erfassungssystem 10. Der Laserwegmesssensor 23 ist mit einer senkrechten Achse parallel zur Achse der Kunststoffflasche 5 angeordnet. Die Kunststoffflasche 5 wird am Laserwegmesssensor 23 vorbeigeführt, wobei die von der Druckluft erzeugte Einbuchtung 19 (gestrichelt) bzw. Eindellung 19 als Distanz aufgezeichnet. Dies bedeutet, dass Daten einer nicht angeblasenen Kunststoffflasche 5 als Referenz verwendet werden, was mit dem Laserstrahl 24 bezeichnet wird, und mit Daten einer angeblasenen Kunststoffflasche 5 verglichen werden, was mit dem Laserstrahl 25 bezeichnet ist. Der Laserstrahl 24 fällt beispielhaft nach passieren eines Linsensystems 26 auf einen bestimmten Punkt eines Chips 27 bzw. auf einen bestimmten Punkt eines Sensorchips 27. Der Laserstrahl 25 fällt dazu beabstandet, also versetzt nach passieren des Linsensystems 26 auf den Chip 27. Insofern weisen beide auf den Chip 27 einfallen Laserstrahlen 24 und 25 eine relative Distanz zueinander auf, aus der auf eine Tolerierbarkeit der Eindellung 19 oder auf eine untolerierbare Eindellung 19 geschlossen werden kann. Dies ist detaillierter auch der detaillierten Darstellung der Figur 4 zu entnehmen. Alternativ zur aufgenommenen Referenzkurve kann die Referenzkurve rechnerisch ermittelt werden.

Der Laserwegmesssensor 23 bzw. sein Messkopf kann vertikal in unterschiedlichen Winkeln angeordnet sein. Beispielhaft kann der Laserwegmesssensor 23 bzw. sein Messkopf in einem Winkel von 8,5° angeordnet sein, was bedeutet, dass der ausgestrahlte Laserstrahl in der Senkrechten um plus oder minus 8,5° (je nach Einbaulage) geneigt ist. Dem liegt die Erkenntnis zugrunde, dass die Oberflächen beispielsweise von PET-Flaschen nicht ideal glatt sind. Es gibt Einschlüsse und Kratzer, die die Reflexionseigenschaften beim Abscannen schlagartig verändern. Beim Messen sollte daher eine Totalreflexion des Lasers vermieden werden. Gleichzeitig darf die diffuse Reflexion nicht zu schwach ausfallen. Deswegen ist der Laser bevorzugt im Winkel von 8,5° zur Kunststoffflasche angeordnet. Die Düse zielt auf den Auftreffpunkt des Lasers. Natürlich kann eine Düse 16 vorgesehen sein, wobei auch eine Anordnung von zwei Düsen 16 denkbar ist, welche auch neben dem Laserwegmesssensor 23 angeordnet sein können.

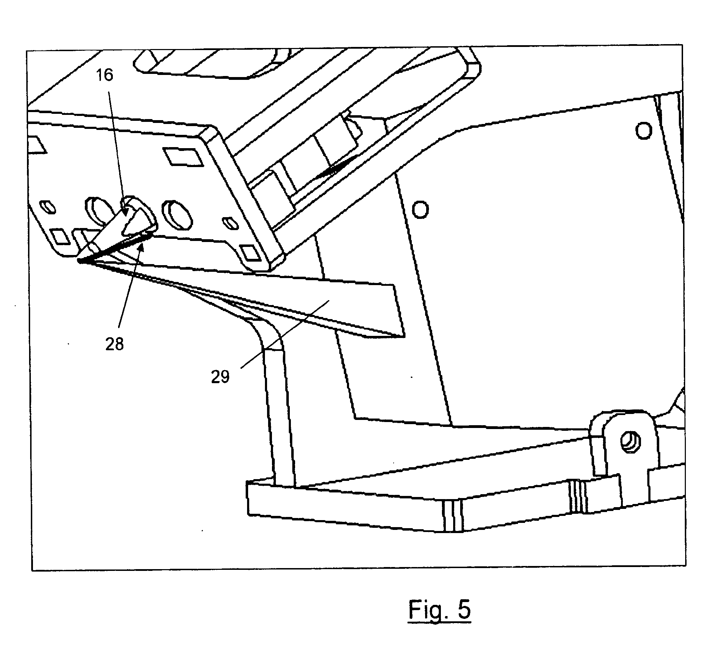

In Figur 5 ist der ausgesendete Laserstrahl ist mit 28 bezeichnet. Mit 29 ist das auf den Sensorchip 27 zurückfallende Licht bezeichnet.

Selbstverständlich kann abweichend zur dargestellten Einbaulage des Laserwegmesssensors 23 gemäß Figur 3 eine Überkopfanordnung denkbar.

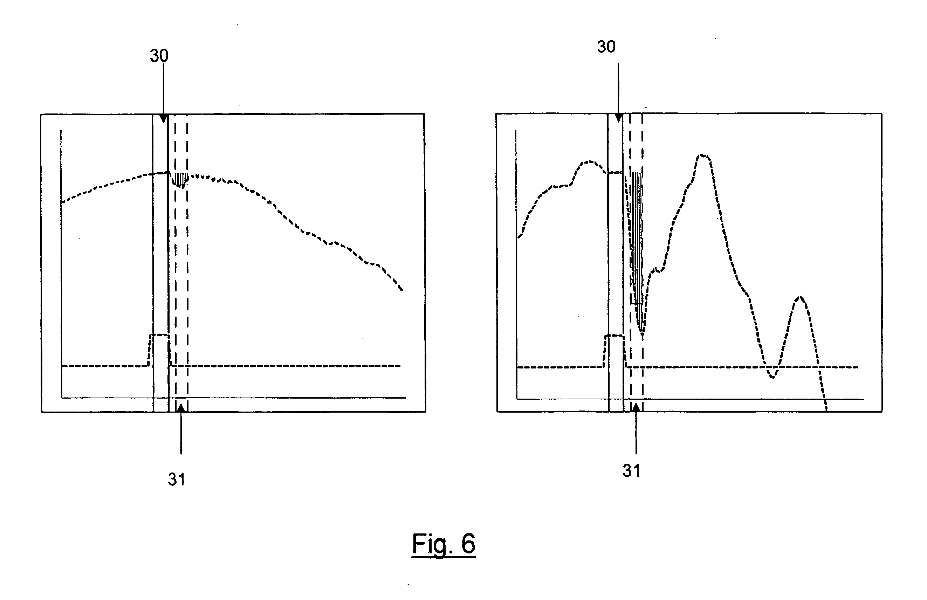

Eine mögliche Bestimmung, ob eine Eindellung tolerierbar ist oder nicht zeigt Figur 6. Figur 6 zeigt skalierte Messkurven. In Figur 6 links ist eine Eindellung mit korrekten Innendruck dargestellt, wobei in Figur 6 rechts eine Eindellung bei einer drucklosen Kunststoffflasche dargestellt ist. Zunächst wird dabei ein Durchschnittswert innerhalb eines Referenzfensters 30 aufgefunden. Ein Flächenintegral innerhalb eines Messfensters 31 gibt die Abweichung an.

Nicht in den Figuren gezeigt, aber von der Erfindung umfasst, ist eine Ausführungsform, bei der eine oder mehrere Düsen auf statt auf den Flaschenwandbereich (18), auf ein Verschlusselement der Behältermündung gerichtet sind und dieses Verschlusselement mit dem kurzzeitigen Druckmediumimpuls beaufschlagt wird. Dieser Ort der Einwirkung kann alleinig vorgesehen werden oder redundant zu der Beaufschlagung im Flaschenrandbereich (18). Die Einwirkung auf das Verschlusselement, insbesondere einen Deckel, eine Kappe oder eine Verschlussfolie, ist häufig konstruktiv vorteilhaft, wenn die baulichen Verhältnisse beengt sind. Das Wirk- und Messprinzip ist analog zum vorgenannten Verfahren.

### Bezugszeichenliste

- 1: Etikettiermaschine
- 2: Einlaufstern
- 3: Etikettierkarussell
- 4: Auslaufstern
- 5: Kunststoffflasche
- 6: Etikettieraggregat
- 7: Drehteller
- 8: Packtulpe
- 9: Prüfeinrichtung
- 10: Erfassungssystem
- 11: Druckmediumsystem
- 12: erste Lichtquelle
- 13: zweite Lichtquelle
- 14: Kamera
- 15: Auswerte- und Steuereinheit
- 16: Düse
- 17: Ventil
- 18: Flaschenwandbereich
- 19: Einbuchtung
- 20: Aussortiervorrichtung
- 21: durchgezogenen Linie
- 22: strichpunktierte Linie
- 23: Laserwegmesssensor
- 24: Laserstrahl
- 25: Laserstrahl
- 26: Linsensystem
- 27: Sensorchip
- 28: Laserstrahl
- 29: Zurückfallendes Licht
- 30: Referenzfenster
- 31: Messfenster

## Patentansprüche

1. Dichtheitsprüfung von gefüllten und verschlossenen Kunststoffflaschen (5), wobei eine Prüfeinrichtung (9) zur Dichtheitsprüfung ein Opto-elektrisches Erfassungssystem (10) und ein Druckmediumsystem (11) aufweist, wobei das Erfassungssystem (10) und zumindest ein steuerbares Ventil (17) des Druckmediumsystems (11) mit einer Auswerte- und Steuereinheit (15) in Verbindung stehen, wobei das steuerbare Ventil (17) ein Hochleistungsschnellschlussventil (17) ist und zumindest ein Druckmediumimpuls variabler Zeitdauer erzeugt wird, wenn die Kunststoffflasche (5) an einer Düse (16) des Druckmediumsystems (11) vorbeigeführt wird, wobei jeder Druckmediumimpuls einen Flaschenwandbereich (18) punktförmig belastet, wobei zumindest eine Lichtquelle (12, 13) des Erfassungssystems (10) zumindest den, den Druckmediumimpuls belasteten Flaschenwandbereich (18) gleichzeitig mit der Erzeugung des Druckmediumimpulses ausleuchtet, wobei eine Kamera (14) des Erfassungssystems (10) Daten des mit dem Druckmediumimpulses belasteten Flaschenwandbereichs (18) aufnimmt und zur Auswerte- und Steuereinheit (15) leitet, wobei die Kamera (14) das Vorhandensein einer durch den Druckmediumimpuls tatsächlich erzeugten Einbuchtung (19) in dem Flaschenwandbereich (18) detektiert, wobei die Auswerte- und Steuereinheit (15) eine Form der tatsächlich erzeugte Einbuchtung (19) bestimmt, und ein Signal zum Aussortieren der Kunststoffflasche (5) generiert, wenn die tatsächliche Einbuchtung (19) von einem vorgegebenen Wert abweicht, **dadurch gekennzelchnet, dass** die Kunststoffflaschen (5) lagestabil gehalten an der Prüfeinrichtung (9) vorbeigeführt werden, und wobei die Zeitdauer des Druckmediumimpulses, welcher auf den Flaschenwandbereich (18) ausgerichtet ist, 1 bis 6 msec beträgt.

2. Dichtheitsprüfung nach Anspruch 1 oder 2, **dadurch gekennzeichnet, dass** die Kunststoffflasche (5) eine dünnwandige Kunststoffflasche (5) ist und aus PET, PEN oder PE besteht.

3. Dichtheitsprüfung nach einem der vorhergehenden Ansprüche, **dadurch gekennzeichnet, dass** die Düse (16) einen Abstand von weniger als 15 mm zum Flaschenwandbereich (18) hat.

4. Dichtheitsprüfung nach einem der vorhergehenden Ansprüche, **dadurch gekennzeichnet, dass** die Düse (16) einen lichten Durchmesser von weniger als 5 mm aufweist,

5. Dichtheitsprüfung nach einem der vorhergehenden Ansprüche, **dadurch gekennzeichnet, dass** die Kamera (14) bezogen auf die Düse (16) oberhalb dieser angeordnet ist, und Daten des Flaschenwandbereichs (18) in einem schrägen Blickwinkel aufnimmt.

6. Dichtheitsprüfung nach einem der vorhergehenden Ansprüche, **dadurch gekennzeichnet, dass** das Erfassungssystem (10) zwei Lichtquellen (12, 13) aufweist, von denen eine erste Lichtquelle (12) oberhalb der Kamera (14) und eine zweite Lichtquelle (13) unterhalb der Kamera (14) aber oberhalb der Düse (16) angeordnet ist.

7. Dichtheitsprüfung nach einem der vorhergehenden Ansprüche, **dadurch gekennzeichnet, dass** das Druckmedium ein Gas, z.B. Druckluft oder ein unter Druck stehendes Inertgas ist.

8. Dichtheitsprüfung nach einem der vorhergehenden Ansprüche, **dadurch gekennzeichnet, dass** die Prüfeinrichtung (9) einer Etikettiermaschine (1) und/oder einem Transporteur zugeordnet ist.

9. Dichtheitsprüfung nach einem der vorhergehenden Ansprüche, **dadurch gekennzeichnet, dass** die Kunststoffflaschen (5) jeweils bodenseitig auf einem Drehteller (7) aufstehend und verschlussseitig mittels einer Packtulpe (8) lagestabil gehalten sind.

10. Dichtheitsprüfung nach einem der vorhergehenden Ansprüche, **dadurch gekennzeichnet, dass** der Flaschenwandbereich (18), welcher mit dem kurzzeitigen Druckmediumimpuls beaufschlagt wird, ein Etikettierbereich der Kunststoffflasche (5) ist.

11. Dichtheitsprüfung nach einem der vorhergehenden Ansprüche, **dadurch gekennzeichnet, dass** statt des Flaschenwandbereichs (18) ein Verschlusselement der Behältermündung, insbesondere ein Deckel, eine Kappe oder eine Verschlussfolie, mit dem kurzzeitigen Druckmediumimpuls beaufschlagt wird.

12. Dichtheitsprüfung nach einem der vorhergehenden Ansprüche, **dadurch gekennzeichnet, dass** de Flaschenwandbereich (18) und ein Verschlusselement der Behaltermündung, insbesondere ein Deckel, eine Kappe oder eine Verschlussfolie, mit dem kurzzeitigen Druckmediumimpuls beaufschlagt wird.

13. Dichtheitsprüfung von gefüllten und verschlossenen Kunststoffflaschen (5) nach einem der vorhergehenden Ansprüche, **dadurch gekennzeichnet, dass** zumindest ein Laserwegmesssensor (23) des Erfassungssystems (10) zumindest den, den Druckmediumimpuls belasteten Flaschenwandbereich (18) gleichzeitig mit der Erzeugung des Druckmediumimpulses mit einem Laserstrahl bestrahlt, wobei der Laserwegmesssensor (23) des Erfassungssystems (10) Daten des mit dem Druckmediumimpulses belasteten Flaschenwandbereichs (18) aufnimmt und zur Auswerte- und Steuereinheit leitet (15).

14. Prüfeinrichtung zur Dichtheitsprüfung von gefüllten und verschlossenen Kunststoffflaschen (5) insbesondere nach einem der vorhergehenden Ansprüche, wobei die Prüfeinrichtung (9) ein Erfassungssystem (10) und ein Druckmediumsystem (11) aufweist, wobei das Erfassungssystem (10) zumindest eine Lichtquelle (12,13) und eine Kamera (14) oder einen Laserwegmesssensor (23) aufweist, welche mit einer Auswerte- und Steuereinheit (15) in Verbindung stehen, wobei das Druckmediumsystem (11) eine Düse (16), ein steuerbares Ventil (17), welches ein Hochleistungsschnellschlussventil (17) ist, das mit der Auswerte- und Steuereinheit (15) in Verbindung steht, und eine Druckmediumquelle aufweist, wobei zumindest ein Druckmediumimpuls variabler Zeitdauer auf einen Flaschenbereich (18) gerichtet ist und mittels welchem dieser punktförmig belastet werden kann, und wobei die zumindest eine Lichtquelle (12, 13) oder ein Laserstrahl des Erfassungssystems (10) zumindest den, den Druckmediumimpuls belasteten Flaschenwandbereich (18) gleichzeitig mit der Erzeugung des Druckmediumimpulses ausleuchten oder bestrahlt kann, wobei mittels der Kamera (14) oder des Laserwegmesssensor (23) des Erfassungssystems (10) Daten des mit dem Druckmediumimpulses belasteten Flaschenwandbereichs (18) aufnehmbar und zur Auswerte- und Steuereinheit (15) leitbar sind, **dadurch gekennzeichnet, dass** Mittel zum zumindest verschlussseitig lagestabilen Halten von Kunststoffflaschen (5) vorgesehen sind.

15. Prüfeinrichtung nach Anspruch 14, **dadurch gekennzeichnet, dass** die Mittel zum lagestabilen Halten eine Packtulpe und eine Teller sind.

16. Prüfelnrichtung nach Anspruch 14 oder 15, **dadurch gekennzeichnet, dass** diese Teil einer Etikettiervorrichtung ist.

## Claims

1. Leak test for filled and closed plastic bottles (5), wherein a testing device (9) for leak testing comprises an opto-electric detection system (10) and a pressure medium system (11), wherein the detection system (10) and at least one controllable valve (17) of the pressure medium system (11) are connected to an evaluation and control unit (15), wherein the controllable valve (17) is a high-performance fast-closing valve (17) and at least one pressure medium pulse of a variable duration is generated when the plastic bottle (5) is moved past a nozzle (16) of the pressure medium system (11), wherein each pressure medium pulse applies a punctiform load on a bottle wall region (18), wherein at least one light source (12, 13) of the detection system (10) illuminates at least the bottle wall region (18) loaded with the pressure medium pulse simultaneously with the generation of the pressure medium pulse, wherein a camera (14) of the detection system (10) receives data of the bottle wall region (18) loaded with the pressure medium pulse and transmits said data to the evaluation and control unit (15), wherein the camera (14) detects the presence of a recess (19) in the bottle wall region (18) said recess having been actually generated by the pressure medium, wherein the evaluation and control unit (15) determines a shape of the actually generated recess (19), and generates a signal for rejecting the plastic bottle (5) if the actual recess (19) deviates from a specified value, **characterised in that** the plastic bottles (5) are led past the testing device (9) in a positionally stable manner, and wherein the duration of the pressure medium pulse directed onto the bottle wall region (18) is 1 to 6 msec.

2. Leak test according to claim 1 or 2, **characterised in that** the plastic bottle (5) is a thin-walled plastic bottle (5) and is made of PET, PEN or PE.

3. Leak test according to any one of the preceding claims, **characterised in that** the nozzle (16) is at a distance of less than 15 mm to the bottle wall region (18).

4. Leak test according to any one of the preceding claims, **characterised in that** the nozzle (16) has an internal diameter of less than 5 mm.

5. Leak test according to any one of the preceding claims, **characterised in that** the camera (14) is arranged relative to the nozzle (16) and above it, and receives data of the bottle wall region (18) at a slanting viewing angle.

6. Leak test according to any one of the preceding claims, **characterised in that** the detection system (10) has two light sources (12, 13), of which a first,light source (12) is arranged above the camera (14) and a second light source (13) is arranged under the camera (14) but above the nozzle (16).

7. Leak test according to any one of the preceding claims, **characterised in that** the pressure medium is a gas, e.g. compressed air or an inert gas under pressure.

8. Leak test according to any one of the preceding claims, **characterised in that** the testing device (9) is allocated to a labelling machine (1) and / or a conveyor.

9. Leak test according to one of the previous claims, **characterised in that** the plastic bottles (5) are held in each case standing with their base on a rotary plate (7) and held on the closure side in a positionally stable manner by means of a packing bell (8).

10. Leak test according to any one of the preceding claims, **characterised in that** the bottle wall region (18) which is exposed to the brief pressure medium pulse is a labelling region of the plastic bottle (5).

11. Leak test according to any one of the preceding claims, **characterised in that** instead of the bottle wall region (18) a closing element of the container mouth, in particular a lid, a cap or a sealing foil, is exposed to the brief pressure medium pulse.

12. Leak test according to any one of the preceding claims, **characterised in that** the bottle wall region (18) and a closing element of the container mouth, in particular a lid, a cap or a sealing foil, is exposed to the brief pressure medium pulse.

13. Leak test on filled and closed plastic bottles (5) according to any one of the preceding claims, **characterised in that** at least one laser distance sensor (23) of the detection system (10) irradiates with a laser beam at least the bottle wall region (18) loaded with the pressure medium pulse simultaneously with the generation of a pressure medium pulse, wherein the laser distance sensor (23) of the detection system (10) receives data of the bottle wall region (18) loaded with the pressure medium pulse and transmits the data to the evaluation and control unit (15).

14. Testing device for the leak testing of filled and closed plastic bottles (5), in particular according to any one of the preceding claims, wherein the testing device (9) comprises a detection system (10) and a pressure medium system (11), wherein the detection system (10) has at least one light source (12, 13) and a camera (14) or a laser distance sensor (23) which are connected to an evaluation and control unit (15), wherein the pressure medium system (11) comprises a nozzle (16), a controllable valve (17), which is a high-performance fast-closing valve (17) which is connected to the evaluation and control unit (15), and a pressure medium source, wherein at least one pressure medium pulse of a variable duration is directed onto a bottle region (18) and by means of which the latter can have a punctiform load applied, and wherein the at least one light source (12, 13) or a laser beam of the detection system (10) can illuminate or irradiate at least the bottle wall region (18) loaded with the pressure medium pulse simultaneously with the generation of the pressure medium pulse, wherein by means of the camera (14) or the laser distance sensor (23) of the detection system (10) data of the bottle wall region loaded with the pressure medium pulse can be received and transmitted to the evaluation and control unit (15), **characterised in that** means are provided for the positionally stable holding of plastic bottles (5) at least on the closure side.

15. Testing device according to claim 14, **characterised in that** the means for the positionally stable holding are a packing bell and a plate.

16. Testing device according to claim 14 or 15, **characterised in that** it is part of a labelling machine.

## Revendications

1. Contrôle d'étanchéité de bouteilles plastique (5) remplies et fermées, un dispositif de contrôle (9) présentant pour le contrôle d'étanchéité un système de détection (10) optoélectrique et un système de moyen sous pression (11), le système de détection (10) et au moins une soupape (17) pouvant être commandée du système de moyen sous pression (11) étant en liaison avec une unité d'évaluation et de commande (15), la soupape pouvant être commandée (17) étant une soupape à fermeture instantanée haute puissance (17) et au moins une impulsion de moyen sous pression de durée variable étant générée si la bouteille plastique (5) passe devant une buse (16) du système de moyen sous pression (11), chaque impulsion de moyen sous pression sollicitant ponctuellement une zone de paroi de bouteille (18), au moins une source de lumière (12, 13) du système de détection (10) éclairant au moins la zone de paroi de bouteille (18) sollicitée par l'impulsion de moyen sous pression simultanément à la génération de l'impulsion de moyen sous pression, une caméra (14) du système de détection. (10) enregistrant des données de la zone de paroi de bouteille (18) sollicitée par l'impulsion de moyen sous pression et les transmettant à l'unité d'évaluation et de commande (15), la caméra (14) détectant la présence d'un creux (19) généré réellement par l'impulsion de moyen sous pression dans la zone de paroi de bouteille (18), l'unité d'évaluation et de commande (15) déterminant une forme du creux (19) généré réellement, et générant un signal de tri de la bouteille plastique (5) si le creux (19) réel diverge d'une valeur prescrite, **caractérisé en ce que** les bouteilles plastique (5) sont passées devant le dispositif de contrôle (9) tout en étant maintenues de manière stable en position, et la durée de l'impulsion de moyen sous pression qui est orientée sur la zone de paroi de bouteille (18) étant comprise entre 1 et 6 ms.

2. Contrôle d'étanchéité selon la revendication 1 ou 2, **caractérisé en ce que** la bouteille plastique (5) est une bouteille plastique (5) à paroi mince et se compose de PET, PEN ou PE.

3. Contrôle d'étanchéité selon l'une quelconque des revendications précédentes, **caractérisé en ce que** la buse (16) présente une distance de moins de 15 mm par rapport à la zone de paroi de bouteille (18).

4. Contrôle d'étanchéité selon l'une quelconque des revendications précédentes, **caractérisé en ce que** la buse (16) présente un diamètre intérieur de moins de 5 mm.

5. Contrôle d'étanchéité selon l'une quelconque des revendications précédentes, **caractérisé en ce que** la caméra (14) est disposée par rapport à la buse (16) au-dessus de celle-ci et enregistre des données de la zone de paroi de bouteille (18) dans un angle de vue oblique.

6. Contrôle d'étanchéité selon l'une quelconque des revendications précédentes, **caractérisé en ce que** le système de détection (10) présente deux sources de lumière (12, 13), dont une première source de lumière (12) est disposée au-dessus de la caméra (14) et une seconde source de lumière (13) est disposée au-dessous de la caméra (14) mais au-dessus de la buse (16).

7. Contrôle d'étanchéité selon l'une quelconque des revendications précédentes, **caractérisé en ce que** le moyen sous pression est un gaz, par exemple de l'air comprimé ou un gaz inerte sous pression.

8. Contrôle d'étanchéité selon l'une quelconque des revendications précédentes, **caractérisé en ce que** le dispositif de contrôle (9) est associé à une étiqueteuse (1) et/ou à un transporteur.

9. Contrôle d'étanchéité selon l'une quelconque des revendications précédentes, **caractérisé en ce que** les bouteilles plastique (5) sont maintenues debout côté sol sur un plateau tournant (7) et de manière stable en position côté fermeture à l'aide d'une tulipe d'emballage (8).

10. Contrôle d'étanchéité selon l'une quelconque des revendications précédentes, **caractérisé en ce que** la zone de paroi de bouteille (18) qui est sollicitée par la brève impulsion de moyen sous pression est une zone d'étiquetage de la bouteille plastique (5).

11. Contrôle d'étanchéité selon l'une quelconque des revendications précédentes, **caractérisé en ce qu'**à la place de la zone de paroi de bouteille (18), un élément de fermeture de l'ouverture de récipient, en particulier un couvercle, un capuchon ou un film de fermeture est sollicité par la brève impulsion de moyen sous pression.

12. Contrôle d'étanchéité selon l'une quelconque des revendications précédentes, **caractérisé en ce que** la zone de paroi de bouteille (18) et un élément de fermeture de l'ouverture de récipient, en particulier un couvercle, un capuchon ou un film de fermeture sont sollicités par la brève impulsion de moyen sous pression.

13. Contrôle d'étanchéité de bouteilles plastique (5) remplies et fermées selon l'une quelconque des revendications précédentes, **caractérisé en ce qu'**au moins un capteur de déplacement laser (23) du système de détection (10) irradie au moins la zone de paroi de bouteille (18) sollicitée par l'impulsion de moyen sous pression simultanément à la génération de l'impulsion de moyen sous pression avec un rayon laser, le capteur de déplacement laser (23) du système de détection (10) enregistrant des données de la zone de paroi de bouteille (18) sollicitée par l'impulsion de moyen sous pression et les transmettant à l'unité d'évaluation et de commande (15).

14. Dispositif de contrôle pour le contrôle d'étanchéité de bouteilles plastique (5) remplies et fermées en particulier selon l'une quelconque des revendications précédentes, le dispositif de contrôle (9) présentant un système de détection (10) et un système de moyen sous pression (11), le système de détection (10) présentant au moins une source de lumière (12, 13) et une caméra (14) ou un capteur de déplacement laser (23) qui est en liaison avec une unité d'évaluation et de commande (15), le système de moyen sous pression (11) présentant une buse (16), une soupape pouvant être commandée (17) qui est une soupape à fermeture instantanée haute puissance (17) qui est en liaison avec l'unité d'évaluation et de commande (15), et une source de moyen sous pression, au moins une impulsion de moyen sous pression de durée variable étant orientée sur une zone de bouteille (18) et à l'aide de laquelle celle-ci peut être sollicitée ponctuellement, et l'au moins une source de lumière (12, 13) ou un faisceau laser du système de détection (10) pouvant éclairer ou irradier au moins la zone de paroi de bouteille (18) sollicitée par l'impulsion de moyen sous pression simultanément à la génération de l'impulsion de moyen sous pression, des données de la zone de paroi de bouteille (18) sollicitées par l'impulsion de moyen sous pression pouvant être enregistrées à l'aide de la caméra (14) ou du capteur de déplacement laser (23) du système de détection (10) et pouvant être transmises à l'unité d'évaluation et de commande (15), **caractérisé en ce que** des moyens sont prévus pour le maintien stable en position au moins côté fermeture des bouteilles plastique (5).

15. Dispositif de contrôle selon la revendication 14, **caractérisé en ce que** les moyens pour le maintien stable en position sont une tulipe d'emballage et un plateau.

16. Dispositif de contrôle selon la revendication 14 ou 15, **caractérisé en ce que** celui-ci fait partie d'un dispositif d'étiquetage.
